# EUROPÄISCHE PATENTSCHRIFT

(11) **EP 1 764 273 B1**
(45) Veröffentlichungstag und Bekanntmachung des Hinweises auf die Patenterteilung: **07.12.2011**
(21) Anmeldenummer: 06120162.0
(22) Anmeldetag: 06.09.2006
(51) Int. Cl.: B60S 1/34

(54) **Blechbefestigungsteil**
Sheet metal fastening element
Pièce de fixation en tôle

(30) Priorität: 20.09.2005 DE 102005044761
(43) Veröffentlichungstag der Anmeldung: 21.03.2007
(73) Patentinhaber: ROBERT BOSCH GMBH, 70442 Stuttgart (DE)
(72) Erfinder: Mayer, Stephan, 77855 Achern (DE)

(56) Entgegenhaltungen:
- EP-A1- 0 579 550
- WO-A1-02/090154
- DE-A1- 3 926 714
- GB-A- 2 117 630
- GB-A- 2 311 209

## Beschreibung

Die Erfindung betrifft einen Wischarm einer Scheibenwischvorrichtung mit einem eine Federeinhängung aufweisenden Blechbefestigungsteil.

Bei Wischarmen werden Gussbefestigungsteile immer mehr durch Blechbefestigungsteile ersetzt. Unter zunehmenden Federkräften infolge immer längerer Ausführungsformen von Wischblättern neigt jedoch die Feder aufnehmende Federeinhängung dazu sich aufzubiegen, wodurch die Zugspannung der Feder nachlässt. Dies führt zu einem Nachlassen der Auflagekraft des Wischblattes auf einer Fahrzeugscheibe, so dass nicht mehr die gewünschte Wischleistung erbracht werden kann.

Aus EP 0 579 550 A1 ist ein Wischarm einer Scheibenwischvorrichtung mit einer Federeinhängung bekannt, die einteilig mit einem Blechbefestigungsteil ausgebildet ist, wobei ein Endstück der Federeinhängung in eine Aussparung einer Seitenwand des Befestigungsteils eingelegt ist.

DE 39 26 714 A1 beschreibt einen Wischarm mit einem Befestigungsteil und einem Deckel, in dem eine Aussparung zum Einhängen einer Feder ausgebildet ist. Das Befestigungsteil weist einen Rücken auf, der gegenüberliegend zum Deckel ausgebildet ist. Der Rücken und der Deckel sind entlang einer Längsseite miteinander verbunden und einteilig ausgebildet. Der Deckel weist Aussparungen auf, in die Befestigungslaschen des Rückens eingesteckt sind. Auf diese Weise ist eine formschlüssige Verbindung zwischen dem Deckel und dem Rücken hergestellt.

Aus WO 02/090154 A1 ist ein Wischarm bekannt, der aus Zinkblech ausgebildet ist oder mit einer Verzinkung versehen ist.

Die Erfindung hat die Aufgabe, den Wischarm dahingehend zu verbessern, dass die genannten Nachteile vermieden werden.

Diese Aufgabe wird gemäß Anspruch 1 und Anspruch 6 gelöst. Vorteilhafte Ausführungsformen sind in den abhängigen Ansprüchen angegeben. Durch die formschlüssige Befestigung der Federeinhängung an dem Blechbefestigungsteil ist ein Aufbiegen der Federeinhängung auch bei hohen Zugspannungen der Feder nicht mehr möglich.

Die Federeinhängung ist in eine in einem Rand des Blechbefestigungsteiles angeordnete Aufnahmeöffnung geschoben.

Das Blechbefestigungsteil und die Federeinhängung sind einstückig ausgebildet.

Auf diese Weise kann das Blechbefestigungsteil in einfachen Schritten hergestellt werden.

Das Blechbefestigungsteil und die Federeinhängung können ein Stanz-Zieh-Biege-Bauteil sein. Es bietet sich deshalb an, das Blechbefestigungsteil und die Federeinhängung in einem Folgeverbundwerkzeug herzustellen.

Aus Gründen des Korrosionsschutzes ist es zweckmäßig, das Blechbefestigungsteil und die Federeinhängung zu verzinken.

Vorteilhafterweise kann die Verzinkung beim Schneiden über die Schneidkante einer Stanzplatine, aus der das Blechbefestigungsteil und die Federeinhängung herstellbar sind, gezogen werden. Dadurch ist auch die Schneidkante des Blechbefestigungsteils und/oder der Federeinhängung vor Korrosion geschützt. Eine nachträgliche Beschichtung des Blechbefestigungsteiles oder der Federeinhängung kann somit entfallen.

Ferner betrifft die Erfindung eine Scheibenwischvorrichtung, insbesondere für ein Kraftfahrzeug, die erfindungsgemäß einen Wischarm nach einem der Ansprüche 1 bis 6 aufweist.

Außerdem betrifft die Erfindung ein Verfahren zur Herstellung eines Blechbefestigungsteiles eines Wischarms nach einem der Ansprüche 1 bis 4, gekennzeichnet durch folgende Schritte:
- Ausstanzen des Blechbefestigungsteiles zusammen mit der Federeinhängung,
- Ziehen des Randes,
- Umbiegen der Federeinhängung,
- Rand des Blechbefestigungsteiles über die Federeinhängung schieben.

Nachfolgend wird ein Ausführungsbeispiel anhand der beiliegenden Zeichnungen näher erläutert.

Im Einzelnen zeigen:
- Fig. 1: eine Draufsicht auf ein Blechbefestigungsteil mit Federeinhängung;
- Fig. 2: eine Schnittansicht durch einen Wischarm;
- Fig. 3: einen Querschnitt durch das Blechbefestigungs- teil während des Einschiebens der Federeinhän- gung in eine Aufnahmeöffnung.

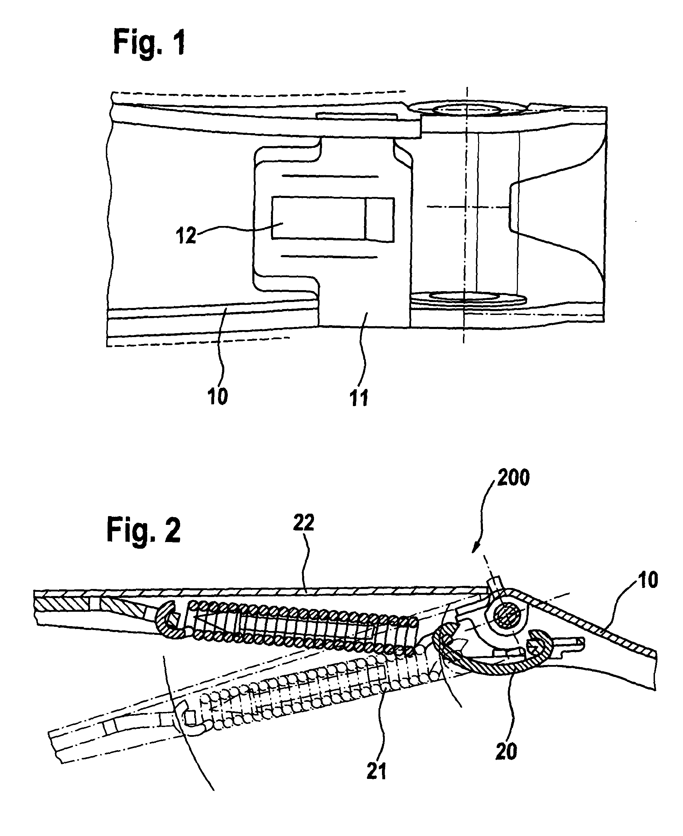

Fig. 2 zeigt einen Wischarm 200 mit einem Blechbefestigungsteil 10 und einem Gelenkteil 22.

Mit dem Blechbefestigungsteil 10 ist der Wischarm 200 an einer hier nicht näher dargestellten Wischerwelle befestigt.

Das Gelenkteil 22 ist an dem Blechbefestigungsteil 10 angelenkt, so dass ein nicht gezeigtes Wischerblatt an dem Wischarm 200 verschwenkbar angeordnet ist. Auf diese Weise kann das Wischblatt von einer Fahrzeugscheibe weggeklappt und an die Fahrzeugscheibe angeklappt werden.

Fig. 1 zeigt das Blechbefestigungsteil 10 mit einer Federeinhängung 11. Die Federeinhängung 11 weist eine Öffnung 12 auf, in die ein C-Bügel 20, der mit einer Feder 21 verbunden ist (siehe Fig. 2), eingehängt werden kann.

Das Blechbefestigungsteil 10 und die Federeinhängung 11 sind ein einstückig ausgebildetes Stanz-Zieh-Biege-Bauteil.

Die Feder 21 ist in das Gelenkteil 22 eingehängt (siehe Fig. 2), wobei die am Blechbefestigungsteil 10 vorgesehene erfindungsgemäße Federeinhängung (11) grundsätzlich auch am Gelenkteil 22 möglich ist.

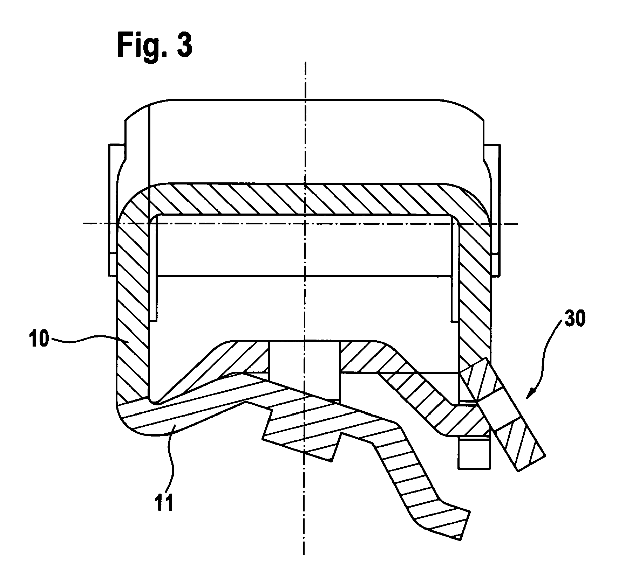

Das Blechbefestigungsteil 10 weist an seinem Rand eine Aufnahmeöffnung 30 auf, in welche die Federeinhängung 11 eingeschoben werden kann (siehe Fig. 3). Zu diesem Zweck wird der Rand des Blechbefestigungsteiles 10 in der Weise umgebogen, dass die Öffnung 30 über die Federeinhängung 11 geschoben wird.

## Patentansprüche

1. Wischarm (200) einer Scheibenwischvorrichtung mit einem eine Federeinhängung (11) aufweisenden Blechbefestigungsteil (10), wobei die Federeinhängung (11) formschlüssig an dem Blechbefestigungsteil (10) befestigbar ist, wobei das Blechbefestigungsteil (10) und die Federeinhängung (11) einstückig ausgebildet sind, **dadurch gekennzeichnet, dass** ein Rand des Blechbefestigungsteils (10) ausgelegt ist, derart umgebogen zu werden, so dass eine in dem Rand des Blechbefestigungsteiles (10) angeordnete Aufnahmeöffnung (30) über die Federeinhängung (11) aufgeschoben wird, wodurch die Federeinhängung (11) in die Aufnahmeöffnung engeschoben werden kann.

2. Wischarm (200) nach Anspruch 1, **dadurch gekennzeichnet, dass** das Blechbefestigungsteil (10) und die Federeinhängung (11) ein Stanz-Zieh-Biege-Bauteil sind.

3. Wischarm (200) nach einem der Ansprüche 1 oder 2, **dadurch gekennzeichnet, dass** das Blechbefestigungsteil (10) und die Federeinhängung (11) verzinkt sind.

4. Wischarm (200) nach Anspruch 3, **dadurch gekennzeichnet, dass** die Verzinkung beim Schneiden über mindestens eine Schneidkante ziehbar ist.

5. Scheibenwischvorrichtung, insbesondere für ein Kraftfahrzeug, **dadurch gekennzeichnet, dass** sie einen Wischarm (200) nach einem der Ansprüche 1 bis 4 aufweist.

6. Verfahren zur Herstellung eines Blechbefestigungsteiles (10) eines Wischarms (200) nach einem der Ansprüche 1 bis 4, **gekennzeichnet durch** folgende Schritte:
- Ausstanzen des Blechbefestigungsteiles (10) mit einer Aufnahmeöffnung (30) zusammen mit der Federeinhängung (11),
- Ziehen des Randes des Blechbefestigungsteils (10),
- Umbiegen der Federeinhängung (11),
- Rand des Blechbefestigungsteiles (10) über die Federeinhängung (11) schieben,
wobei ein Endstück der Federeinhängung (11) in die Aufnahmeöffnung (30) geschoben wird.

## Claims

1. Wiper arm (200) of a window wiper device, with a sheet-metal fastening part (10) having a spring mounting (11), wherein the spring mounting (11) can be fastened to the sheet-metal fastening part (10) in a form-fitting manner, and wherein the sheet-metal fastening part (10) and the spring mounting (11) are formed as a single piece, **characterized in that** one border of the sheet-metal fastening part (10) is designed to be bent over in such a manner that a receiving opening (30) arranged in the border of the sheet-metal fastening part (10) is pushed over the spring mounting (11), as a result of which the spring mounting (11) can be pushed into the receiving opening.

2. Wiper arm (200) according to Claim 1, **characterized in that** the sheet-metal fastening part (10) and the spring mounting (11) are a punched-drawn-bent component.

3. Wiper arm (200) according to either of Claims 1 and 2, **characterized in that** the sheet-metal fastening part (10) and the spring mounting (11) are zinc-coated.

4. Wiper arm (200) according to Claim 3, **characterized in that** the zinc-coating can be drawn over at least one cutting edge during the cutting operation.

5. Window wiper device, in particular for a motor vehicle, **characterized in that** it has a wiper arm (200) according to one of Claims 1 to 4.

6. Method for producing a sheet-metal fastening part (10) of a wiper arm (200) according to one of Claims 1 to 4, **characterized by** the following steps:
- punching out the sheet-metal fastening part (10) with a receiving opening (30) together with the spring mounting (11),
- drawing the border of the sheet-metal fastening part (10),
- bending over the spring mounting (11),
- pushing the border of the sheet-metal fastening part (10) over the spring mounting (11),
an end piece of the spring mounting (11) being pushed into the receiving opening (30).

## Revendications

1. Bras d'essuie-glace (200) d'un dispositif d'essuie-glace comprenant une pièce de fixation en tôle (10) présentant une suspension à ressort (11), la suspension à ressort (11) pouvant être fixée par engagement par coopération de forme sur la pièce de fixation en tôle (10), la pièce de fixation en tôle (10) et la suspension à ressort (11) étant réalisées d'une seule pièce, **caractérisé en ce qu'**un bord de la pièce de fixation en tôle (10) est conçu de manière à être recourbé de telle sorte qu'une ouverture de réception (30) pratiquée dans le bord de la pièce de fixation en tôle (10) soit poussée par dessus la suspension à ressort (11), de sorte que la suspension à ressort (11) puisse être enfoncée dans l'ouverture de réception.

2. Bras d'essuie-glace (200) selon la revendication 1, **caractérisé en ce que** la pièce de fixation en tôle (10) et la suspension à ressort (11) sont constituées par un composant embouti-cintré.

3. Bras d'essuie-glace (200) selon l'une quelconque des revendications 1 ou 2, **caractérisé en ce que** la pièce de fixation en tôle (10) et la suspension à ressort (11) sont galvanisées.

4. Bras d'essuie-glace (200) selon la revendication 3, **caractérisé en ce que** la galvanisation peut être emboutie lors du découpage par-dessus au moins une arête de coupe.

5. Dispositif d'essuie-glace, notamment pour un véhicule automobile, **caractérisé en ce qu'**il présente un bras d'essuie-glace (200) selon l'une quelconque des revendications 1 à 4.

6. Procédé de fabrication d'une pièce de fixation en tôle (10) d'un bras d'essuie-glace (200) selon l'une quelconque des revendications 1 à 4, **caractérisé par** les étapes suivantes :
- estampage de la pièce de fixation en tôle (10) avec une ouverture de réception (30) conjointement avec la suspension à ressort (11),
- emboutissage du bord de la pièce de fixation en tôle (10),
- cintrage de la suspension à ressort (11),
- repoussement du bord de la pièce de fixation en tôle (10) par-dessus la suspension à ressort (11),
un embout de la suspension à ressort (11) étant enfoncé dans l'ouverture de réception (30).
